# EUROPÄISCHE PATENTANMELDUNG

(11) **EP 2 272 685 A2**
(43) Veröffentlichungstag der Anmeldung: **12.01.2011**
(21) Anmeldenummer: 10168637.6
(22) Anmeldetag: 06.07.2010
(51) Int. Cl.: B60B 15/26

(54) **Fahrwerk für ein landgestütztes Fahrzeug oder ein Luftfahrzeug**

(30) Priorität: 06.07.2009 DE 102009031879
(71) Anmelder: Roth, Wilhelm, 81671 München (DE)
(72) Erfinder: Roth, Wilhelm, 81671 München (DE)
(74) Vertreter: GROSSE SCHUMACHER KNAUER VON HIRSCHHAUSEN

(57) **Zusammenfassung**

Die Erfindung betrifft ein Fahrwerk (1) für ein landgestütztes Fahrzeug oder ein Luftfahrzeug, das ein Rad (3) und parallel und in Antriebsrichtung drehfest zu dem Rad (3) ein Greifrad (6) aufweist. Das Greifrad (6) ist traktionserhöhend relativ zum Rad (3) auf eine Fahrbahn (2) absenkbar. Erfindungsgemäß ist das Greifrad (6) von Bolzen (8) in axialer Richtung (9) durchsetzt und in radialer Richtung (10) schwimmend gehalten, wobei von den Bolzen (8) durchsetzte Öffnungen (11) im Greifrad (6) polygonal sind. Ferner ist eine fahrwerksfeste Absenkvorrichtung (13) vorgesehen, mit der eine radiale, auf die Fahrbahn (2) gerichtete Kraft (KR) auf eine Umfangsfläche (15, 16) des Greifrades (6) ausübbar ist.

## Beschreibung

Die Erfindung betrifft ein Fahrwerk für ein landgestütztes Fahrzeug, insbesondere einen Lastkraftwagen, Bus, Schwertransporter oder Anhänger, oder ein Luftfahrzeug, das ein Rad und parallel und in Antriebsrichtung drehfest zu dem Rad ein Greifrad aufweist, wobei das Greifrad traktionserhöhend relativ zum Rad auf eine Fahrbahn absenkbar ist.

Im Stand der Technik sind verschiedene Lösungen zur Erhöhung der Traktion von Fahrzeugen bekannt. So geht zum Beispiel aus der EP 0 239 748 A2 eine Vorrichtung zur Verbesserung des Fahrverhaltens von Fahrzeugen auf insbesondere glatten oder schneebedeckten Fahrbahnen hervor. Bei einer solchen Vorrichtung ist ein Zusatzrad nach Art eines Radringes oder einer Radscheibe dem eigentlichen Rad zugeordnet. Das Zusatzrad ist relativ zum Fahrzeugrad auf eine Fahrbahn absenkbar oder weist radial ausfahrbare Segmente auf. Die Kontaktfläche ist in einer Weise ausgebildet, dass ein erhöhtes Griffverhalten gewährleistet ist.

Dieses Dokument lehrt aber nicht, wie das Fahrwerk ausgebildet sein muss, um die Absenkbarkeit des Zusatzrades relativ zum Rad zu bewirken.

Aus der DE 200 22 100 U1 geht eine weitere Vorrichtung zur Verbesserung der Haftung zwischen einem Fahrzeug und der Fahrbahn hervor. Diese Vorrichtung lehrt ebenfalls, radial verlagerbare Backen vorzusehen, die bei Bedarf mittels einer Kolben-Zylinder-Anordnung ausgefahren werden können. Insbesondere können Hydraulik- oder Pneumatikzylinder zur Anwendung gelangen. Die Druckluftquelle oder die Hydropumpe können dabei im Fahrzeuginnern angeordnet sein.

Nachteilig an Lösungen mit ausfahrbaren Segmenten oder Backen ist, dass die Traktionsverstärkung nicht kontinuierlich, sondern intermittierend ist. Kurze Zeitabschnitte mit verbesserter Traktion wechseln sich mit Zeitabschnitten ab, in denen die Traktion nicht erhöht ist. Dies kann sich insbesondere in Gefahrensituationen als problematisch erweisen.

Vor diesem Hintergrund ist es die Aufgabe dieser Erfindung, ein Fahrwerk für ein landgestütztes Fahrzeug oder ein Luftfahrzeug aufzuzeigen, bei der ein Greifrad relativ zu einem Rad auf die Fahrbahn absenkbar ist.

Diese Aufgabe wird durch ein Fahrwerk mit den Merkmalen von Anspruch 1 gelöst. Vorteilhafte Ausführungsformen und Weiterbildungen der Erfindung gehen aus den Unteransprüchen 2 bis 15 hervor.

Bei einem Fahrwerk mit den Merkmalen im Oberbegriff von Anspruch 1 ist erfindungsgemäß das Greifrad von Bolzen in axialer Richtung durchsetzt und in radialer Richtung schwimmend gehalten, wobei die von den Bolzen durchsetzten Öffnungen im Greifrad polygonal, vorzugsweise dreieckförmig, sind. Zudem ist eine fahrwerksfeste Absenkvorrichtung vorgesehen, mit der eine radiale, auf die Fahrbahn gerichtete Kraft auf eine Umfangsfläche des Greifrades ausübbar ist.

Diese Anordnung erlaubt es, ein mit dem Rad drehfest gekoppeltes Greifrad relativ zum Rad auf die Fahrbahn abzusenken, und zwar im sich drehenden wie auch im stillstehenden Zustand. Die polygonalen Öffnungen im Greifrad ermöglichen die Verschiebung des Greifrades in eine exzentrische Stellung unabhängig von der Drehstellung des Greifrades. Die fahrzeugfeste Absenkvorrichtung drückt oder zieht das sich drehende Greifrad in Richtung Fahrbahn, so dass ein Abschnitt des Außenumfangs des Greifrades traktionserhöhend mit der Fahrbahn in Kontakt kommt. Die Absenkvorrichtung kann manuell oder durch ein Bordsystem wie ESP (Elektronisches Stabilitätsprogramm), ABS (Antiblockiersystem) und/oder ASR (Antriebsschlupfregelung) gesteuert werden.

Bevorzugt ist das Greifrad zwischen zwei Führungsscheiben angeordnet, wobei die Führungsscheiben durch die das Greifrad durchsetzenden Bolzen beabstandet sind. Auf diese Weise wird das Greifrad in axialer Richtung besser und stabiler parallel zum Umfang geführt, als es bei einer punktuellen Halterung durch die Bolzen der Fall ist.

Vorzugsweise sind die Führungsscheiben am Rad befestigt. Die Befestigung erfolgt insbesondere durch die Bolzen und gegebenenfalls durch Distanzstege. Das Felgenbett des Rades kann hierzu, insbesondere bei Felgen aus einem Leichtmetall, wie Aluminium, Gussaugen oder einen Gussring aufweisen, mit dem die angrenzende Führungsscheibe verzapft und/oder verschraubt und/oder verschweißt ist.

In einer bevorzugten Ausführungsform ist einer der Bolzen in einer der Öffnungen entlang einer Seitenkante der Öffnung in radialer Richtung des Greifrades bewegbar. Dies hat zur Folge, dass die Seitenkante parallel zu der radialen Verschiebungsstrecke des Bolzens sein muss. Auf diese Weise liegt der Bolzen ständig an der Öffnungswand an. Mithin kann das Antriebsdrehmoment und/oder das Verzögerungsmoment kontinuierlich auf das Greifrad übertragen werden.

Zweckmäßigerweise weist eine der Öffnungen des Greifrades abgerundete Ecken auf. Abgerundete Ecken können einfach durch Fräsen mit einem Fingerfräser hergestellt werden. Durch die Abrundungen wird Ermüdungsbrüchen des Greifrades vorgebeugt, die insbesondere durch Rissbildungen in den Ecken entstehen könnten.

Besonders vorteilhaft ist es, wenn eine Zentriervorrichtung zum konzentrischen Ausrichten des Greifrades relativ zu den Führungsscheiben vorgesehen ist. Diese Zentriervorrichtung ermöglicht es, das Greifrad im nicht abgesenkten, zentrierten Zustand in einer Position zu fixieren, bei der keine Unwucht auftritt, welche die Fahrsicherheit und den Fahrkomfort beeinträchtigen würde. Die Zentriervorrichtung kann hierzu in Vertiefungen, insbesondere Rundaussparungen, des Greifrades rastend zur Anlage gelangende Rastelemente, vorzugsweise in Form von Kugeln oder Stiften, aufweisen. Die Rastelemente sind bevorzugt von Federn beaufschlagt. Diese Federn können in einem Fettpolster angeordnet sein.

Gemäß einer weiteren Ausführungsform wirkt die Absenkvorrichtung auf eine Rundzarge des Greifrades ein. Wenn das Greifrad als Scheibe mit einer konzentrischen Öffnung ausgebildet ist, dann ist die Rundzarge ein an den Innenumfang angesetzter, umlaufender, axialer Schenkel. Im Querschnitt ist das Greifrad dann L-förmig ausgebildet. Durch die Rundzarge kann der Angriffspunkt der Absenkvorrichtung am Greifrad beliebig axial versetzt angeordnet werden. Somit fungiert die Rundzarge als Mitnehmer des Greifrades.

Vorteilhaft weist die Absenkvorrichtung eine Rolleneinheit auf, vorzugsweise mit drei in einem Dreieck angeordneten, die Rundzarge kontaktierenden Rollen. Durch die Rolleneinheit kann die Kraft auf das rotierende Greifrad sowohl kontinuierlich als auch reibungsarm übertragen werden. Die Rollen der Rolleneinheit rollen hierbei auf einer äußeren und/oder inneren Umfangsfläche des Greifrades, zweckmäßigerweise der Rundzarge, ab. Durch eine Dreirollenanordnung ist es zudem möglich, die Krafteinleitung auf mehrere Rollen zu verteilen und das Greifrad nicht nur in der Absenkrichtung, sondern auch in der Gegenrichtung, der Anheberichtung, zu bewegen. Ein weiterer nützlicher Effekt einer Rolleneinheit mit drei in einem Dreieck angeordneten Rollen ist, dass die Bewegung des Greifrades im ausgerückten Zustand stabilisiert wird, da bei einer innen und zwei außen an der Rundzarge angreifenden Rollen keine Freiheitsgrade des Greifrades in Antriebsrichtung und in Richtung der Hochachse des Fahrwerks mehr vorhanden sind.

In einer weiteren Ausführungsform weist die Absenkvorrichtung wenigstens eine pneumatisch oder hydraulisch betätigte Kolben-Zylinder-Einheit auf mit einer ersten Schubstange, welche mit der Rolleneinheit gekoppelt ist, wobei die erste Schubstange in einem Zylindergehäuse verlagerbar ist. Mithin kann ein im Fahrzeug bestehendes hydraulisches oder pneumatisches System genutzt werden, um den erforderlichen Druck eines Arbeitsfluids zu erzeugen. Gemäß einer speziellen Ausführungsform sind je Absenkvorrichtung zwei parallel zueinander angeordnete Kolben-Zylinder-Einheiten vorgesehen. Um eine zweikammerige Kolben-Zylinder-Einheit in beide Richtungen betätigen zu können, sind zwei, vorteilhaft kurze Druckleitungen und ein elektrisch betätigtes Pendelventil vorgesehen. Die Kolben-Zylinder-Einheit kann zwei ineinander verschiebbare Schubstangen aufweisen, eine erste mit der Rolleneinheit gekoppelte Schubstange und eine zweite Schubstange, welche gegenüber dem Zylindergehäuse in wenigstens einer Stellung fixierbar ist. Durch diese Lösung ist es möglich, die Rolleneinheit in wenigstens einer, bevorzugt zwei oder mehr, Stellungen zu arretieren. Dies ist insbesondere bei längeren Fahrstrecken von Vorteil, bei denen der Druck des Arbeitsfluids nicht aufrechterhalten werden kann. Mithin kann das Greifrad mit Hilfe des Arbeitsfluids in eine Absenkstellung gedrückt und dann durch die Fixierung der zweiten Schubstange in dieser Stellung gehalten werden. Die Fixierung der zweiten Schubstange kann insbesondere durch einen E-Magnetschalter und einen Verriegler erfolgen.

Vorteilhaft ist zwischen der ersten Schubstange und der zweiten Schubstange eine Feder angeordnet. Durch die Feder können kleinere Stöße, die von Unebenheiten der Fahrbahn auf das Greifrad übertragen werden, ausgeglichen werden, wodurch der Fahrkomfort erhöht wird.

Zwischen der ersten Schubstange und dem Zylindergehäuse kann eine Rückstellfeder angeordnet sein. Diese Rückstellfeder gewährleistet das Anheben eines ausgefahrenen Greifrades in eine zentrische eingerückte Position auch wenn mit es nicht möglich ist, einen ausreichenden Saugdruck des Arbeitsfluids zu erzeugen.

Das Zylindergehäuse ist an verschiedenen bekannten Elementen von Fahrwerken befestigbar. Vorzugsweise wird das Zylindergehäuse an einem Drehschemel befestigt. Dies hat den Vorteil, dass der Zylinder und die Rolleneinheit mit dem Rad mitschwenken, d.h. stets parallel zum Lenkeinschlag ausgerichtet sind. Es ist aber auch vorstellbar, das Zylindergehäuse an einem Federbein zu befestigen. Hierbei muss gegebenenfalls die Winkelstellung des Federbeins in Abhängigkeit von der Einfederung berücksichtigt werden.

Bevorzugt ist zwischen der ersten Schubstange und der Rolleneinheit ein einstellbarer Längenausgleich vorgesehen. Dieser wird besonders einfach dadurch bereitgestellt, dass die erste Schubstange in ein Gewinde in der Rolleneinheit einschraubbar und in einer gewünschten Position durch eine Kontermutter fixierbar ist. Eine Staubmanschette kann zudem vorgesehen sein, um den Übergang von der Kolben-Zylindereinheit zur Rolleneinheit vor Verunreinigung zu schützen. Der Längenausgleich kann so ausgeführt sein, dass er werkstattseitig voreinstellbar ist. Es ist aber auch vorstellbar, dass eine Einstellung vor jedem Fahrtbeginn oder sogar während der Fahrt vorgenommen werden kann.

Weiterhin ist vorgesehen, dass die den Führungsscheiben zugewandten Stirnseiten und/oder die Außenumfangsfläche des Greifrades beschichtet sein können. Vorstellbar ist aber auch, die dem Greifrad zugewandten Stirnseiten der Führungsscheiben mit einer Beschichtung zu versehen. Die Beschichtung zwischen dem Greifrad und den Führungsscheiben ist bevorzugt reibungsreduzierend und geräuschminimierend. Als Beschichtungsmaterial eignet sich insbesondere Polytetrafluorethylen. Die Außenumfangsfläche des Greifrades ist dagegen vorzugsweise mit einer reibungserhöhenden Beschichtung versehen, die insbesondere Sand oder Korund enthält. Zudem kann die Außenumfangsfläche des Greifrades mit einer Konturierung versehen oder bereift sein.

Zur Gewichtsreduzierung können das Greifrad und/oder die Führungsscheiben mit Durchdringungen versehen sein. Zudem können das Greifrad und/oder die Führungsscheiben aus einem Leichtmetall oder einem Kohlefaserverbundwerkstoff hergestellt sein.

Ferner kann zwischen den Bolzen und dem Greifrad eine Lagerung in Form von Kugel-, Rollen, oder Nadellagern vorgesehen sein. Auch können Hartgummiselente in die Öffnungen des Greifrades eingebracht werden, um einen ruhigeren Umlauf zu erzeugen.

Die Erfindung ist nachfolgend anhand von in den Zeichnungen dargestellten Ausführungsbeispielen näher erläutert. Es zeigen:
- Fig. 1: eine Querschnittdarstellung des Rades und des Greifrades des Fahrwerks;
- Fig. 2: eine Seitenansicht auf die Fahrzeuginnenseite des Fahrwerks;
- Fig. 3: eine Schnittdarstellung der Zentriervorrichtung;
- Fig. 4A und 4B: eine Seitenansicht der Rolleneinheit von der Fahrzeugaußenseite gesehen;
- Fig. 5: ein Querschnitt durch einen Hydraulikzylinder;
- Fig. 6: ein Querschnitt durch einen Pneumatikzylinder;
- Fig. 7: eine Draufsicht auf das Fahrwerk; und
- Fig. 8: ein Querschnitt der Hydraulikpumpe.

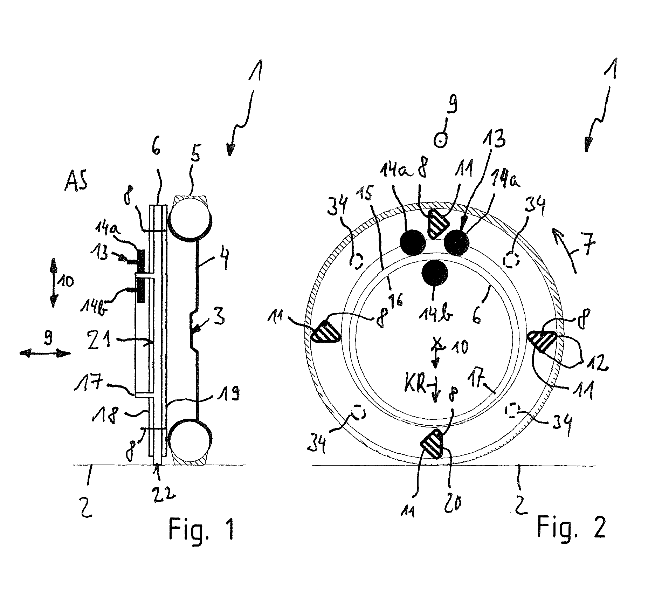

In den Figuren 1 und 2 ist das erfindungsgemäße Fahrwerk 1 für ein landgestütztes Fahrzeug oder ein Luftfahrzeug gezeigt. Das Fahrwerk 1 weist ein auf einer Fahrbahn 2 abrollendes Rad 3 auf, das eine Felge 4 und einen Reifen 5 umfasst. Mit dem Rad 3 ist ein paralleles Greifrad 6 in Antriebsrichtung 7 drehfest gekoppelt. Das Greifrad 6 kann traktionserhöhend auf die Fahrbahn 2 in eine ausgefahrene Stellung AS abgesenkt werden. Die Anordnung erlaubt es, das Greifrad 6 bei Nichtbenutzung in eine zentrierte Stellung ZS wieder einzufahren. Um die Verschiebung des Greifrades 6 bewirken zu können, ist das Greifrad 6 von Bolzen 8 in axialer Richtung 9 durchsetzt und in radialer Richtung 10 schwimmend gehalten. Die von den Bolzen 8 durchsetzten Öffnungen 11 sind dreieckförmig, können aber auch polygonal sein. Die Ecken 12 der Öffnungen 11 sind abgerundet. Die Absenkung wird durch eine Absenkvorrichtung 13 bewirkt, die - wie weiter unter noch näher erläutert werden wird - an anderen Elementen des Fahrwerks 1 befestigt ist und nicht mit dem Rad 3 rotiert. Die Absenkvorrichtung 13 ist in den Figuren 1 und 2 nur durch die das Greifrad 6 kontaktierenden Rollen 14a, 14b angedeutet. Mit der Absenkvorrichtung 13 kann ein radiale Kraft KR auf eine Umfangsfläche 15, 16, hier die äußeren und inneren Umfangsflächen 15; 16 einer Rundzarge 17, ausgeübt werden. Dies ermöglicht es, das rotierende Greifrad 6 in Richtung Fahrbahn 2 zu drücken, wo es in der ausgefahrenen Stellung AS die Traktion des Fahrwerks 1 erhöht. Um dem Greifrad 6 zusätzliche Stabilität zu verleihen, ist es axial von einer fahrzeugseitig gesehen inneren Führungsscheibe 18 und einer äußeren Führungsscheibe 19 geführt. Die Führungsscheiben 18, 19 sind durch die Bolzen 8 voneinander beabstandet. Die Bolzen 8 können entweder direkt am Rad 3 befestigt sein oder an der äußeren Führungsscheibe 19, die dann wiederum mit dem Rad 3 verschraubt und verzapft oder verschweißt ist. Die von den Bolzen 8 durchsetzten Öffnungen 11 sind so platziert und ausgerichtet, dass sich die Bolzen 8 in radialer Richtung 10 entlang einer der Seitenkanten 20 der Öffnung 11 bewegen können. Das bedeutet, dass die entsprechende Seitenkante 20 parallel versetzt zur radialen Richtung 10 angeordnet sein sollte. Das Greifrad 6 ist an seinen den Führungsscheiben 18, 19 zugewandten Stirnflächen 21 mit Polytetrafluorethylen beschichtet. Die Außenumfangsfläche 22 des Greifrades 6, die die Fahrbahn 2 kontraktiert, ist konturiert, d.h. zahnradmäßig ausgefräst.

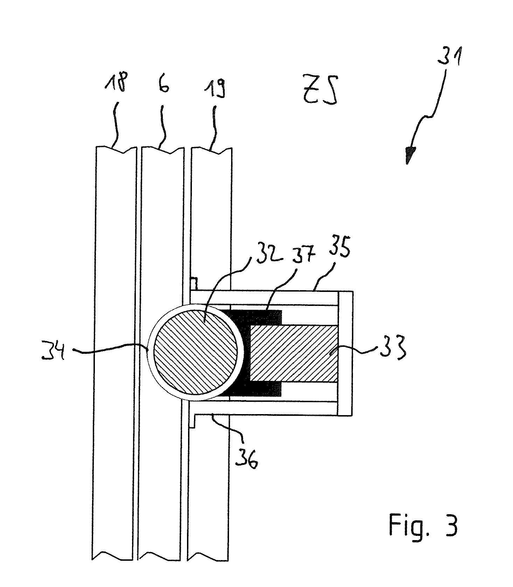

In der zentrierten, eingefahrenen Stellung ZS des Greifrades 6 wird das Greifrad 6 durch eine Zentriervorrichtung 31 gehalten, vgl. Fig. 2 und 3. Die Zentriervorrichtung 31 weist Rastelemente 32 in Form von, von Federn 33 beaufschlagten, Kugeln auf, die in Vertiefungen 34, d.h. Zentrieraussparungen, im Greifrad 6 zur Anlage gelangen. Die Rastelemente 32 sind gleichmäßig über einen Teilkreis versetzt angeordnet. Vorzugsweise sind acht Rastelemente 32 und Vertiefungen 34 vorgesehen. Die Kugeln 32 sind in einem Gehäuse 35, das in Öffnungen 36 in der äußeren Führungsscheibe 19 angeordnet ist, gehalten. Die Federn 33 sind zur Vermeidung von Korrosion von einem Fettpolster umgeben. Um die Kugeln 32 sauber führen zu können, sind zwischen den Kugeln 32 und den Federn 33 Kugelschieber 37 vorgesehen.

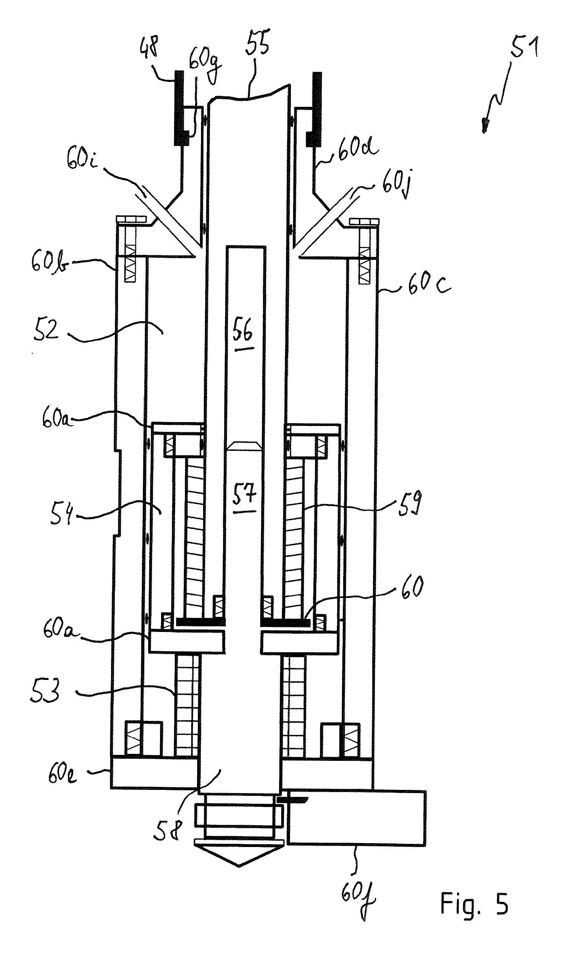

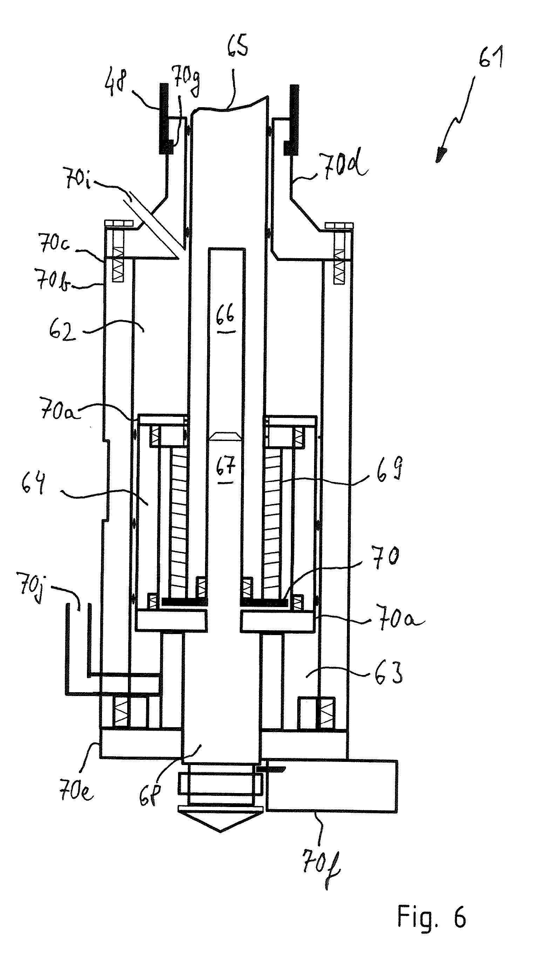

Die Absenkvorrichtung 13 umfasst eine Rolleneinheit 40 (Fig. 1, 2 und 4A/4B) und eine Kolben-Zylinder-Einheit 51, 61 (Fig. 5 und 6). Die Rolleneinheit 40 umfasst drei in einem Dreieck angeordnete Rollen 14a, 14b, wobei zwei äußere Rollen 14a symmetrisch zur Hochachse 41 angeordnet sind und die innere Rolle 14b auf der Hochachse 41 liegt. Durch die äußeren Rollen 14a kann eine in Richtung der Fahrbahn 2 gerichtete Druckkraft auf die Rundzarge 17 ausgeübt werden. Die innere Rolle 14b ist primär zum Anheben des Greifrades 6 in die zentrierte Stellung ZS vorgesehen. Darüber hinaus wird der Lauf des Greifrades 6 in der ausgefahrenen Stellung AS durch die Rollen 14a, 14b stabilisiert.

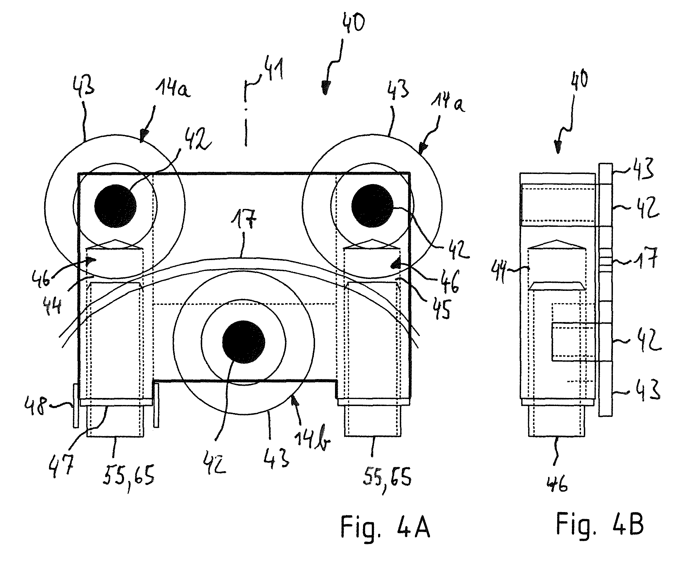

Die Rolleneinheit 40 ist in den Fig. 4A und 4B näher dargestellt. Die Rollen 14a, 14b sind auf, bezogen auf das Greifrad 6 bzw. das Rad 3 axialen Achsen 42 gelagert. Die Rollen 14a, 14b können jeweils einen Reifen 43 aus Metall, Gummi oder einem anderen geeigneten Werkstoff aufweisen, der eine lange Lebensdauer gewährleistet. In der Rolleneinheit 40 sind zwei parallele, in vertikaler Richtung verlaufende Gewindebohrungen 44, 45 vorgesehen. In diese Gewindebohrungen 44, 45 sind erste Schubstangen 55, 65 von zwei Kolben-Zylinder-Einheiten 51, 61 einschraubbar, d. h. in diesem Fall wird die Rolleneinheit 40 von zwei parallel angeordneten Kolben-Zylinder-Einheiten 51, 61 bewegt. Durch die Gewindebohrungen 44, 45 wird ein Längenausgleich 46 bereitgestellt. Die Rolleneinheit 40 kann somit hinsichtlich der Höhe in der zentrierten Stellung ZS und der ausgefahrenen Stellung AS des Greifrades 6 justiert und durch Anziehen von Kontermuttern 47 fixiert werden. Es sind Staubschutzmanschetten 48 am Übergang von der Rolleneinheit 40 zur Kolben-Zylinder-Einheit 51, 61 vorgesehen, um Verunreinigungen der Absenkvorrichtung 13 vorzubeugen.

Eine Kolben-Zylinder-Einheit kann als Hydraulikzylinder 51 (Fig. 5) oder Pneumatikzylinder 61 (Fig. 6) ausgebildet sein. Der Hydraulikzylinder 51 ist dabei nur mit einer Kammer 52 und einer Rückstellfeder 53 ausgestattet, während der Pneumatikzylinder 61 mit zwei Kammern 62, 63 ausgebildet ist. Die Kolben-Zylinder-Einheiten 51, 61 umfassen jeweils einen Hohlkolben 54, 64, der mit einer ersten Schubstange 55, 65 gekoppelt ist. Die erste Schubstange 55, 65 weist in Längsrichtung ein zentrisches Sackloch 56, 66 auf, in das ein Führungsdorn 57, 67 einer zweiten Schubstange 58, 68 eingeschoben ist. Im Hohlkolben 54, 64 ist zwischen der ersten Schubstange 55, 65 und der zweiten Schubstange 58, 68 eine Spiralfeder 59, 69 angeordnet, um Unebenheiten der Fahrbahn 2 ausgleichen zu können. Die Spiralfeder 59, 69 wird am Übergang zur zweiten Schubstange 58, 68 von einem Federteller 60, 70 gestützt. Beidendig ist der Hohlkolben 54, 64 durch Abdeckscheiben 60a, 70a begrenzt. Die Abdeckscheiben 60a, 70a des Hohlkolbens 54, 64 sind durch Dichtungen nach bekannter Art gegenüber einer Zylinderseitenwand 60b, 70b bzw. den Schubstangen 55, 65; 58, 68 abgedichtet. Die Schubstangen 55, 65; 58, 68 sind in einem Zylindergehäuse 60c, 70c verlagerbar, das einen Deckel 60d, 70d und einen Boden 60e, 70e aufweist, die mit einer Zylinderseitenwand 60b, 70b verschraubt sind. Die zweite Schubstange 58, 68 durchsetzt den Boden 60e, 70e und ist gegenüber dem Boden 60e, 70e in mehreren, vorzugsweise mindestens zwei Stellungen durch einen E-Magnetschalter 60f, 70f und eine Verriegelung fixierbar. Der Deckel 60d, 70d weist eine umlaufende Nut 60g, 70g für die Staubschutzmanschette 48 auf.

Beim Hydraulikzylinder 51 weist der Deckel 60d zwei Kanäle 60i, 60j für die Zuleitung und die Ableitung von Hydraulikflüssigkeit auf. Zudem ist eine unterstützende Rückstellfeder 53 zwischen der Abdeckscheibe 60a des Hohlkolbens 54 und dem Boden 60e vorgesehen. Die Rückstellfeder 53 ist insbesondere eine Spiralfeder.

Der Pneumatikzylinder 61 weist zwei Kammern 62, 63 auf, wobei die erste Kammer 62 im oberen Teil angeordnet ist und bei Unterdrucksetzung die Rolleneinheit 40 über die erste Schubstange 65 absenkt und die zweite Kammer 63 zwischen der unteren Abdeckscheibe 70a des Hohlkolbens 64 und dem Boden 70e angeordnet ist. Der Deckel 70d weist in diesem Fall nur einen Kanal 70i auf. Ein zweiter Kanal 70j zur Zuleitung von Arbeitsfluid zur zweiten Kammer 63 ist in der Zylinderseitenwand 70b vorgesehen. An beide Kanäle 70i, 70j sind jeweils nur kurze Druckleitungen angeschlossen, die von einem elektrisch gesteuerten Pendelventil ausgehen.

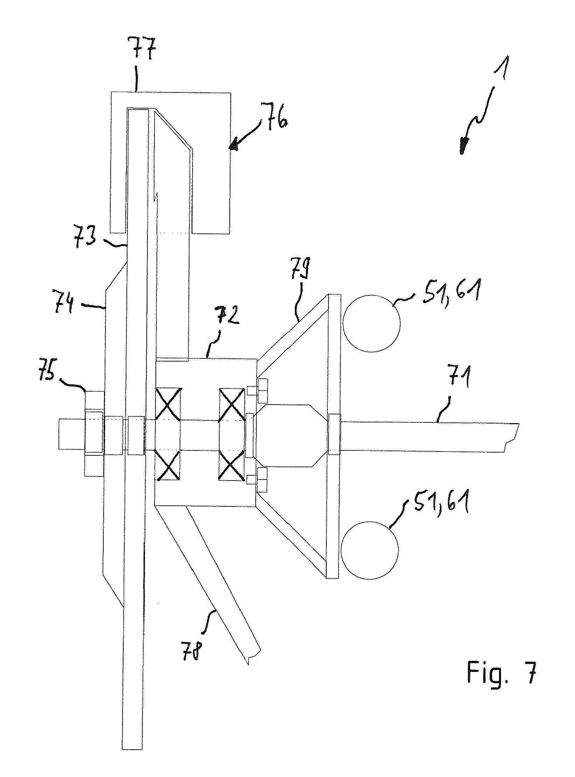

In Fig. 7 ist das Fahrwerk 1 ausschnittsweise und schematisch in der Draufsicht gezeigt. Eine Welle 71 erstreckt sich durch eine Lagereinheit 72. Auf die Welle 71 sind eine Bremsscheibe 73 und eine Felge 74 montiert, die durch eine Sicherungsmutter 75 gehalten werden. An die Lagereinheit 72 sind eine Bremseinheit 76 mit einem Bremssattel 77 und ein Spurhebel 78 montiert. Weiterhin ist ein Drehschemel 79 an der Lagereinheit 72 befestigt. Fahrzeuginnenseitig sind am Drehschemel 79 zwei Kolben-Zylinder-Einheiten 51, 61 der Absenkvorrichtung 13 montiert.

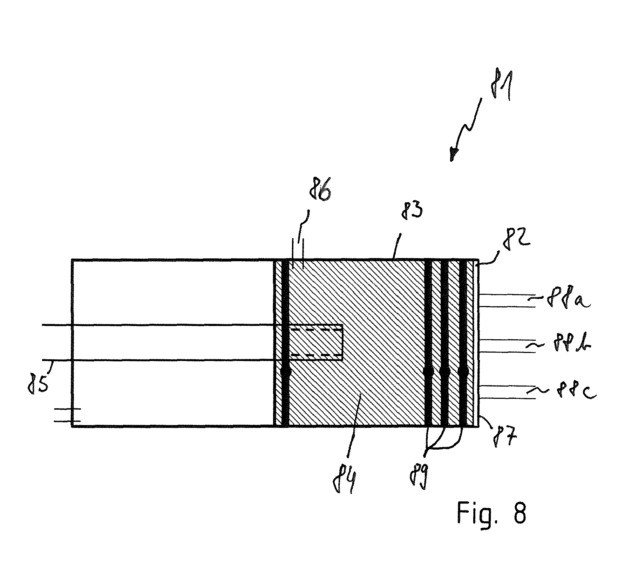

Fig. 8 zeigt eine Hydraulikpumpe 81. Eine Kammer 82 eines Zylinders 83 ist mit einem Arbeitsfluid gefüllt, das durch einen Kolben 84 komprimiert werden kann. Der Kolben 84 wird von einer nicht näher dargestellten Einheit über eine Schubstange 85 bewegt. In die Kammer 82 führt eine Leitung 86 als Einlass für das Arbeitsfluid. Am Zylinderboden 87 sind drei Auslässe 88a, 88b, 88c vorgesehen. Der erste Auslass 88a ist für das Fahrwerk vorne links, der zweite Auslass 88b für das Fahrwerk vorne rechts und der dritte Auslass 88c für die Hinterachse vorgesehen. Der Kolben 84 weist drei umlaufende Nuten auf, in denen Dichtringe 89 angeordnet sind.

### Bezugszeichen

- 1 -: Fahrwerk
- 2 -: Fahrbahn
- 3 -: Rad
- 4 -: Felge
- 5 -: Reifen
- 6 -: Greifrad
- 7 -: Antriebsrichtung
- 8 -: Bolzen
- 9 -: axiale Richtung von 3, 6
- 10 -: radiale Richtung von 6
- 11 -: Öffnung
- 12 -: Ecke
- 13 -: Absenkvorrichtung
- 14a -: äußere Rolle
- 14b -: innere Rolle
- 15 -: äußere Umfangsfläche von 17
- 16 -: innere Umfangsfläche von 17
- 17 -: Rundzarge
- 18 -: innere Führungsscheibe
- 19 -: äußere Führungsscheibe
- 20 -: Seitenkante
- 21 -: Stirnseite von 6
- 22 -: Außenumfangsfläche von 6
- 31 -: Zentriervorrichtung
- 32 -: Rastelement
- 33 -: Feder
- 34 -: Vertiefung
- 35 -: Gehäuse
- 36 -: Öffnung
- 37 -: Kugelschieber
- 40 -: Rolleneinheit
- 41 -: Hochachse
- 42 -: Achse von 14a, 14b
- 43 -: Reifen
- 44 -: Gewindebohrung
- 45 -: Gewindebohrung
- 46 -: Längenausgleich
- 47 -: Kontermutter
- 48 -: Staubschutzmanschette
- 51 -: Hydraulikzylinder
- 52 -: Kammer
- 53 -: Rückstellfeder
- 54 -: Hohlkolben
- 55 -: erste Schubstange
- 56 -: Sackloch
- 57 -: Führungsdorn
- 58 -: zweite Schubstange
- 59 -: Spiralfeder
- 60 -: Federteller
- 60a -: Abdeckscheibe
- 60b -: Zylinderseitenwand
- 60c -: Zylindergehäuse
- 60d -: Deckel
- 60e -: Boden
- 60f -: E-Magnetschalter
- 60g -: Nut
- 60i -: Kanal
- 60j -: Kanal
- 61 -: Pneumatikzylinder
- 62 -: erste Kammer
- 63 -: zweite Kammer
- 64 -: Hohlkolben
- 65 -: erste Schubstange
- 66 -: Sackloch
- 67 -: Führungsdorn
- 68 -: zweite Schubstange
- 69 -: Spiralfeder
- 70 -: Federteller
- 70a -: Abdeckscheibe
- 70b -: Zylinderseitenwand
- 70c -: Zylindergehäuse
- 70d -: Deckel
- 70e-: Boden
- 70f -: E-Magnetschalter
- 70g -: Nut
- 70i -: Kanal
- 70j -: Kanal
- 71 -: Welle
- 72 -: Lagereinheit
- 73 -: Bremsscheibe
- 74 -: Felge
- 75 -: Sicherungsmutter
- 76 -: Bremseinheit
- 77 -: Bremssattel
- 78 -: Spurhebel
- 79 -: Drehschemel
- 81 -: Hydraulikpumpe
- 82 -: Kammer
- 83 -: Zylinder
- 84 -: Kolben
- 85 -: Schubstange
- 86 -: Leitung
- 87 -: Zylinderboden
- 88a -: erster Auslass
- 88b -: zweiter Auslass
- 88c -: dritter Auslass
- 89 -: Dichtring

- ZS -: zentrierte Stellung
- AS -: ausgefahrene Stellung

## Patentansprüche

1. Fahrwerk für ein landgestütztes Fahrzeug oder ein Luftfahrzeug, das ein Rad (3) und parallel und in Antriebsrichtung drehfest zu dem Rad (3) ein Greifrad (6) aufweist, wobei das Greifrad (6) traktionserhöhend relativ zum Rad (3) auf eine Fahrbahn (2) absenkbar ist, **dadurch gekennzeichnet, dass** das Greifrad (6) von Bolzen (8) in axialer Richtung (9) durchsetzt und in radialer Richtung (10) schwimmend gehalten ist, wobei von den Bolzen (8) durchsetzte Öffnungen (11) im Greifrad (6) polygonal sind, und dass eine fahrwerksfeste Absenkvorrichtung (13) vorgesehen ist, mit der eine radiale, auf die Fahrbahn (2) gerichtete Kraft (KR) auf eine Umfangsfläche (15, 16) des Greifrades (6) ausübbar ist.

2. Fahrwerk nach Anspruch 1, **dadurch gekennzeichnet, dass** das Greifrad (6) zwischen zwei Führungsscheiben (18, 19) angeordnet ist, wobei die Führungsscheiben (18, 19) durch die das Greifrad (6) durchsetzenden Bolzen (8) beabstandet sind und die Führungsscheiben (18, 19) vorzugsweise am Rad (3) befestigt sind.

3. Fahrwerk nach Anspruch 1 oder 2, **dadurch gekennzeichnet, dass** einer der Bolzen (8) in einer der Öffnungen (11) entlang einer Seitenkante (20) der Öffnung (11) in radialer Richtung (10) des Greifrades (6) bewegbar ist.

4. Fahrwerk nach einem der Ansprüche 1 bis 3, **dadurch gekennzeichnet, dass** eine der Öffnungen (11) eine abgerundete Ecke (12) aufweist.

5. Fahrwerk nach einem der Ansprüche 1 bis 4, **dadurch gekennzeichnet, dass** eine Zentriervorrichtung (31) zum konzentrischen Ausrichten des Greifrades (6) relativ zu den Führungsscheiben (18, 19) vorgesehen ist.

6. Fahrwerk nach Anspruch 5, **dadurch gekennzeichnet, dass** die Zentriervorrichtung (31) in Vertiefungen (34) im Greifrad (6) rastend zur Anlage gelangende Rastelemente (32), insbesondere Kugeln oder Stifte, aufweist.

7. Fahrwerk nach einem der Ansprüche 1 bis 6, **dadurch gekennzeichnet, dass** die Absenkvorrichtung (13) auf eine Rundzarge (17) des Greifrades (6) einwirkt.

8. Fahrwerk nach Anspruch 7, **dadurch gekennzeichnet, dass** die Absenkvorrichtung (13) eine Rolleneinheit (40), vorzugsweise mit drei in einem Dreieck angeordneten, die Rundzarge (17) kontaktierenden Rollen (14a, 14b), aufweist.

9. Fahrwerk nach Anspruch 8, **dadurch gekennzeichnet, dass** die Absenkvorrichtung (13) wenigstens eine hydraulisch oder pneumatisch betätigte Kolben-Zylinder-Einheit (51; 61) aufweist mit einer ersten Schubstange (55, 65), welche mit der Rolleneinheit (40) gekoppelt ist, wobei die erste Schubstange (55, 65) in einem Zylindergehäuse (60c, 70c) verlagerbar ist.

10. Fahrwerk nach Anspruch 9, **dadurch gekennzeichnet, dass** die Kolben-Zylinder-Einheit (51, 61) zwei ineinander verschiebbare Schubstangen (55, 65; 58, 68) aufweist, die erste mit der Rolleneinheit (40) gekoppelte Schubstange (55, 65) und eine zweite Schubstange (58, 68), welche gegenüber dem Zylindergehäuse (60c, 70c) in wenigstens einer Stellung fixierbar ist.

11. Fahrwerk nach Anspruch 10, **dadurch gekennzeichnet, dass** zwischen den Schubstangen (55, 65; 58, 68) eine Feder (59, 69) angeordnet ist.

12. Fahrwerk nach einem der Ansprüche 9 bis 11, **dadurch gekennzeichnet, dass** zwischen der ersten Schubstange (55) und dem Zylindergehäuse (60c) eine Rückstellfeder (53) angeordnet ist.

13. Fahrwerk nach einem der Ansprüche 9 bis 12, **dadurch gekennzeichnet, dass** das Zylindergehäuse (60c, 70c) an einem Drehschemel (79) befestigt ist.

14. Fahrwerk nach einem der Ansprüche 9 bis 13, **dadurch gekennzeichnet, dass** zwischen der ersten Schubstange (55, 65) und der Rolleneinheit (40) ein einstellbarer Längenausgleich (46) vorgesehen ist.

15. Fahrwerk nach einem der Ansprüche 1 bis 14, **dadurch gekennzeichnet, dass** die den Führungsscheiben (18, 19) zugewandten Stirnseiten (21) und/oder die Außenumfangsfläche (22) des Greifrades (6) beschichtet sind.
